# EUROPEAN PATENT APPLICATION

(11) **EP 4 761 219 A1**
(43) Date of publication of application: **17.06.2026**
(21) Application number: 24887590.8
(22) Date of filing: 29.08.2024
(51) Int. Cl.: H04L 67/125

(54) **DATA PROCESSING METHOD AND RELATED APPARATUS**

(30) Priority: 07.11.2023 CN 202311478788
(71) Applicant: Tencent Technology (Shenzhen) Company Limited, Shenzhen, Guangdong 518057 (CN)
(72) Inventor: YANG, Yong, Shenzhen, Guangdong 518057 (CN)
(74) Representative: EP&C
(86) International application number: PCT/CN2024/115344
(87) International publication number: WO 2025/097971

(57) **Abstract**

Disclosed in the present application are a data processing method and a related apparatus, which can be applied to various scenarios such as cloud technology, artificial intelligence, smart traffic and assisted driving. During the process of a server sending a control instruction to a terminal by means of a network, a user-plane function device in the network may acquire a control instruction message sent by the server, wherein the control instruction message comprises control instructions to be processed and a timestamp used for the server to send said control instructions. If it is determined that said control instructions in the control instruction message are time-sensitive control instructions, a sending order of said control instructions may be accurately determined on the basis of the timestamp. Then, said control instructions may be sent to the terminal in the sending order, wherein the terminal is used for executing corresponding operations in a task in response to said control instructions. Therefore, it is ensured that a sending order for a plurality of control instructions is correct, and it is ensured that the plurality of control instructions for controlling a terminal to execute a task are sent to the terminal by strictly following the correct sending order, such that the terminal can correctly operate.

## Description

This application claims priority to Chinese Patent Application No. 2023114787882, filed with the China National Intellectual Property Administration on November 7, 2023, and entitled "METHOD FOR PROCESSING DATA AND RELATED APPARATUS".

### FIELD OF THE TECHNOLOGY

The present disclosure relates to the field of communication technologies, and in particular, to a remote control technology.

### BACKGROUND OF THE DISCLOSURE

Nowadays network communication techniques are widely applied to industrial Internet scenarios, especially to the field of industrial intelligent manufacturing, with the rapid development of network communication technologies. For example, a remote-control system for an industrial robot is provided based on network communication technology, or remote medical treatment is provided based on network communication technology. Application of network communication techniques makes industrial control more automatic and intelligent.

In these scenarios, a cloud server usually continuously delivers control commands to a remote terminal through networks. Although current networks, especially a 5th generation mobile communication technology (5G) network, have high real-time performance, many uncontrollable factors still exist in their data transmission process. As a result, once the control commands delivered by the server are disordered in temporal sequence, the terminal cannot work correctly.

### SUMMARY

To resolve the foregoing technical problems, the present disclosure provides a method for processing data and related apparatus, to ensure that control commands are transmitted to a terminal strictly based on the correct transmission sequence and ensure that the terminal can work correctly.

Embodiments of the present disclosure disclose the following technical solutions.

According to an aspect, an embodiment of the present disclosure provides a method for processing data. The method is executable by a computer device, and the method includes: obtaining a control packet transmitted by a server, where the control packet comprises a first control command and a time stamp, and the time stamp indicates time at which the server transmits the first control command; parsing the time stamp and the first control command from the control packet in response to determining that the first control command in the control packet is a time-sensitive command, where the time-sensitive command refers to a command meeting following conditions: the command coordinates with a second control command for controlling a terminal to complete a task, and a first action of the terminal in response to the command and a second action of the terminal in response to the second control command follow a preset order when the terminal executes the task; determining, according to the parsed time stamp, a transmission rank of the first control command in a plurality of control commands; and transmitting the first control command to a terminal according to the transmission rank of the first control command in the plurality of control commands, where the terminal is configured to execute an action in the task in response to the first control command.

According to an aspect, an embodiment of the present disclosure provides an apparatus for processing data. The apparatus includes: an obtaining unit, configured for obtaining a control packet transmitted by a server, where the control packet comprises a first control command and a time stamp, and the time stamp indicates time at which the server transmits the first control command; a parsing unit, configured for parsing the time stamp and the first control command from the control packet in response to determining that the first control command in the control packet is a time-sensitive command, where the time-sensitive command refers to a command meeting following conditions: the command coordinates with a second control command for controlling a terminal to complete a task, and a first action of the terminal in response to the command and a second action of the terminal in response to the second control command follow a preset order when the terminal executes the task; a determining unit, configured for determining, according to the parsed time stamp, a transmission rank of the first control command in a plurality of control commands; and a transmitting unit, configured for transmitting the first control command to a terminal according to the transmission rank of the first control command in the plurality of control commands, where the terminal is configured to execute an action in the task in response to the first control command.

According to an aspect, an embodiment of the present disclosure provides a computer device, the computer device including a processor and a memory. The memory stores a computer program and is configured for transmitting the computer program to the processor. The processor, when executing instructions in the computer program, implements the foregoing method.

According to an aspect, an embodiment of the present disclosure provides a computer-readable storage medium storing a computer program. The computer program, when executed by a processor, causes the processor to perform the foregoing method.

According to an aspect, an embodiment of the present disclosure provides a computer program product including a computer program. The computer program, when executed by a processor, implements the foregoing method.

Herein when the server transmits the control command to the terminal via a network, a user plane function device in the network can obtain the control packet transmitted by the server, where the control packet comprises the first control command and the time stamp at which the server transmits the first control command. When the first control command in the control packet is the time-sensitive command, the first control command needs to be transmitted according to a specific transmission order, such that the terminal is ensured to complete the task correctly under control of the first control command. The time stamp represents a time at which the server transmits the first control command. Accordingly, the first control commands can be protected against disorder, which is due to uncontrollable factors when the first control command is transmitted to the terminal via the network. Specifically, the time stamp and the first control command may be read from the control packet, and a temporal rank (i.e., the transmission rank) of the first control command in a sequence of multiple transmitted first control commands can be determined according to the time stamp. Then, when transmitting these commands to the terminal, the first control command is transmitted according to its rank. The terminal is configured to perform the operation, as instructed by the first command, in the task in response to the first control command. Thus, for each time-sensitive command, an accurate transmission rank of the time-sensitive command can be determined before the time-sensitive command is transmitted to the terminal, and the time-sensitive command is transmitted according to its rank. When there are multiple control commands, a transmission sequence of the control commands can be kept consistent with its designated sequence to ensure successful task implementation, i.e., the transmitting is ensured to be correct. Hence, even if the temporal sequence of the control commands is shuffled in the transmission process, the user plane function device can still recover the correct transmission order, which ensures the control commands instructing the terminal to execute the task can be transmitted to the terminal strictly in the correct sequence. The terminal can thus operate correctly.

### BRIEF DESCRIPTION OF THE DRAWINGS

To describe the technical solutions of the embodiments of the present disclosure or the related art more clearly, the following briefly introduces the accompanying drawings required for describing the embodiments or the related art. Apparently, the accompanying drawings in the following description show only some embodiments of the present disclosure, and a person of ordinary skill in the art may still derive other drawings from these accompanying drawings without creative efforts.
FIG. 1 is an architectural diagram of an application scenario of a method for processing data according to an embodiment of the present disclosure.
FIG. 2 is a flowchart of a method for processing data according to an embodiment of the present disclosure.
FIG. 3 is an schematic structural diagram of a control packet according to an embodiment of the present disclosure.
FIG. 4 is an architectural diagram of a software system of a method for processing data according to an embodiment of the present disclosure.
FIG. 5 is an schematic diagram of clock synchronization on a basis of a synchronizing device according to an embodiment of the present disclosure.
FIG. 6 is a schematic architectural diagram of a system for implementing a method for processing data in related art.
FIG. 7 is an example diagram of an entire system architecture of a method for processing data according to an embodiment of the present disclosure.
FIG. 8 is a structural diagram of an apparatus for processing data according to an embodiment of the present disclosure.
FIG. 9 is a structural diagram of a terminal according to an embodiment of the present disclosure.
FIG. 10 is a structural diagram of a server according to an embodiment of the present disclosure.

### DESCRIPTION OF EMBODIMENTS

The following describes embodiments of the present disclosure with reference to the accompanying drawings.

In a scenario in which a terminal is controlled to work based on network communication technologies, for example, the terminal is an industrial robot, a remote control system needs to remotely control the industrial robot based on the network communication technologies. In this case, a cloud server usually continuously delivers control commands to a remote industrial terminal through networks. Although currently used networks, especially a 5G network, have high real-time performance, many uncontrollable factors exist in a network data transmission process. Once a time sequence of the control commands delivered by the server is disordered, the terminal certainly cannot work correctly.

Such a control command that has a high requirement on the time sequence and enables that the terminal cannot work correctly once the time sequence is disordered may be referred to as a time-sensitive command. Correspondingly, the server installs a control application on the server to control the terminal. A control command delivered by the server may be specifically a control command delivered by the control application, and a control application delivering the time-sensitive command may be referred to as a time sensitive application.

An example in which the terminal is the industrial robot is used, and it is assumed that the industrial robot needs to perform the following operations to complete a task: operation (1): walk to a specified position to open a valve; operation (2): take away an object conveyed on a conveying belt; and operation (3): deliver the object to a specific position for storage. Operation (1) is performed through control by using a control command 1, operation (2) is performed through control by using a control command 2, and operation (3) is performed through control by using a control command 3. To implement the foregoing target task, the server needs to sequentially transmit the control command 1, the control command 2, and the control command 3 to the terminal. However, many uncontrollable factors may exist in a process of transmitting the control command through the network, for example, network congestion. Consequently, the terminal first receives the control command 3, then receives the control command 1, and finally receives the control command 2, and sequentially executes the received control commands based on a receiving sequence of the control commands. Because a time sequence of the control commands is disordered, the industrial robot cannot correctly execute the task.

To resolve the foregoing technical problems, an embodiment of the present disclosure provides a method for processing data. For each first control command, a correct transmission rank of the first control command in a temporal sequence of multiple control commands is determined before the first control command is transmitted to the terminal, and the first control command is transmitted according to transmission rank. When there are multiple control commands, a transmission sequence of the control commands can be kept consistent with its designated sequence to ensure successful task implementation, i.e., the transmitting is ensured to be correct. Hence, even if the temporal sequence of the control commands is shuffled in the transmission process, the user plane function device can still recover the correct transmission order, which ensures the control commands instructing the terminal to execute the task can be transmitted to the terminal strictly in the correct sequence. The terminal can thus operate correctly.

The method for processing data provided in the embodiments of the present disclosure may be applied to an industrial Internet scenario based on the network communication technologies, and in particular, an industrial Internet scenario in which the time-sensitive command is delivered through a time sensitive application, for example, remote control of the industrial robot based on the network communication technologies, or remote medical treatment based on the network communication technologies. An application scenario of the method for processing data is not limited in the embodiments of the present disclosure.

A method for processing data provided in embodiments of the present disclosure may be performed by a computer device. The computer device may be used as a user plane function (UPF) device. The UPF device is an important component in a network used when a server transmits a control command to a terminal. The server may be an independent physical server, a server cluster or a distributed system including a plurality of physical servers, or a cloud server providing a cloud computing service. The terminal may be used as a user equipment (UE). The terminal includes, but is not limited to, a terminal supporting a network, such as a smartphone, a computer, an intelligent voice interaction device, an intelligent appliance, an in-vehicle terminal, an aircraft, a robot, a medical terminal, a police terminal, a game terminal, an augmented reality (AR) device, a virtual reality (VR) device, a mobile Internet device, a terminal device in industrial control, a wireless device in unmanned driving, a mobile medical device in remote operation, or a smart household device. When the method for processing data in the embodiments of the present disclosure is applied to an industrial Internet scenario, the terminal may be an industrial terminal.

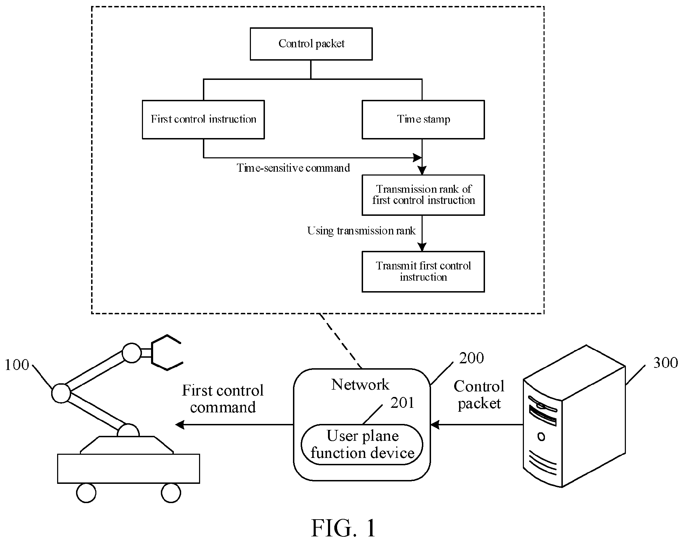

Refence is made to FIG. 1, which is an architectural diagram of an application scenario of a method for processing data. The application scenario may include a terminal 100, a network 200, and a server 300. The server 300 may transmit a control command to the terminal 100 through the network 200 to control the terminal to complete a target task. In FIG. 1, descriptions are provided by using an example in which the terminal 100 is an industrial robot.

In embodiments of the present disclosure including the embodiments of both the claims and the specification (hereinafter referred to as "all embodiments of the present disclosure"), the terminal 100 may include one or more terminals, and is configured to complete a corresponding task, or cooperate with other terminals, to complete the same task based on control commands transmitted in a sequence. For example, the terminals include a terminal 1, a terminal 2, and a terminal 3, a control command 1 is configured for controlling the terminal 1 to complete the operation (1), a control command 2 is configured for controlling the terminal 2 to complete operation (2), the control command 3 is configured for controlling the terminal 3 to complete operation (3), and the terminals work correctly in cooperation with each other to complete the task.

The network 200 may include a user plane function device 201. The user plane function device 201 mainly supports routing and forwarding of UE service data, data and service identification, action and policy execution, and the like. In this embodiment of the present disclosure, the user plane function device 201 is mainly configured to perform the method for processing data provided in embodiments of the present disclosure. It transmits the control commands strictly based on the correct transmission sequence, in order to control the terminal to execute the task, thereby ensuring that the terminal can work correctly.

A type of the network is not limited in this embodiment of the present disclosure, and may be, for example, a 5G network, a 4th generation mobile communication technology (4G) network, or a 3th generation mobile communication technology (3G) network. An example in which the network is the 5G network is mainly used in this embodiment of the present disclosure for description.

With the promotion and application of the 5G technology, the 5G network is gradually applied to particular industries and enterprises. For ease of distinguishing, a 5G network that serves a mobile phone, a computer, and the like of the public and that is provided by an operator is referred to as a 5G public network, and a 5G network that provides a network communication service for a professional user (for example, a user in an industry or a user of a company) is referred to as a 5G non-public network (5G NPN). The 5G non-public network refers to a 5G professional network that implements network signal coverage in a specific area and provides a communication service for a specific user in processes such as organization, command, management, production, and scheduling. Because the 5G non-public network communication has a strong industry application feature, the 5G non-public network communication is continuously widely applied to fields such as politics, railways, transportation, electricity, emergency, esports, mining, cloud games, mobile medical, unmanned driving, smart household, and industrial automation.

The server 300 may located in a cloud or may be referred to as a cloud server. To control the terminal 100, a control application may be installed on the server 300. A control command delivered by the server 300 may be specifically a control command delivered through the control application, and a control application delivering a time-sensitive command may be referred to as a time-sensitive application.

In a process in which the server 300 transmits the control command to the terminal 100 through the network 200, the user plane function device 201 in the network 200 may obtain a control packet transmitted by the server 300. The control packet refers to a unit of data structure for exchanging and transmitting the control command(s) in the network. The structure of the control packet may be defined by a communication protocol. In all embodiments of the present disclosure, the control packet may include a first control command and a time stamp at which the server 300 transmits the first control command. The first control command refers to a control command that needs to be transmitted to the terminal 100 and is configured for instructing the terminal 100 to perform an action. The action herein may be, for example, moving forward, moving backward, or stopping immediately. The time stamp indicates precise time at which the first control command is transmitted by the server 300. A unit for the value of the time stamp is not limited herein, and it may be, for example, second, millisecond, or microsecond. Herein the unit of the time stamp may be 100 microseconds as an example.

When the user plane function device 201 determines that the first control command in the control packet is the time-sensitive command, it is determined that the first control command is to be transmitted following an order defined by a temporal transmission sequence of the control commands that comprise the first control command, so as to ensure that the terminal can be instructed to complete the corresponding task correctly through the control commands.

The time stamp may represent time at which the server 300 transmits the first control command. Therefore, when the first control command is transmitted to the terminal 100 through the network 200, in order to stay robust against disordered transmission sequence of the control commands caused by uncontrollable factors in the transmission process, the user plane function device 201 may parse the time stamp and the first control command from the control packet, to accurately determine the transmission rank of the first control command among the control commands according to the time stamp. Then, the user plane function device 201 may transmit the first control command to the terminal 100 based on the transmission order, where the terminal 100 is configured to execute the corresponding operation in the task in response to the first control command.

For each first control command, the correct transmission rank of the first control command in the temporal sequence of multiple control commands is determined before the first control command is transmitted to the terminal, and the first control command is transmitted according to transmission rank. When there are multiple control commands, a transmission sequence of the control commands can be kept consistent with its designated sequence to ensure successful task implementation, i.e., the transmitting is ensured to be correct. Hence, even if the temporal sequence of the control commands is shuffled in the transmission process, the user plane function device can still recover the correct transmission order, which ensures the control commands instructing the terminal to execute the task can be transmitted to the terminal strictly in the correct sequence. The terminal can thus operate correctly.

The method for processing data provided in herein may be applied to the field of artificial intelligence technologies. Here the illustration mainly focuses on automatic execution of the method based on the artificial intelligence technologies. When embodiments of the present disclosure are applied to a specific product or technology, separate user permission or consent need to be obtained for data related to user information involved in an entire process, and collection, use, processing, etc. of the related data need to comply with the laws, regulations, and standards of related countries and/or regions.

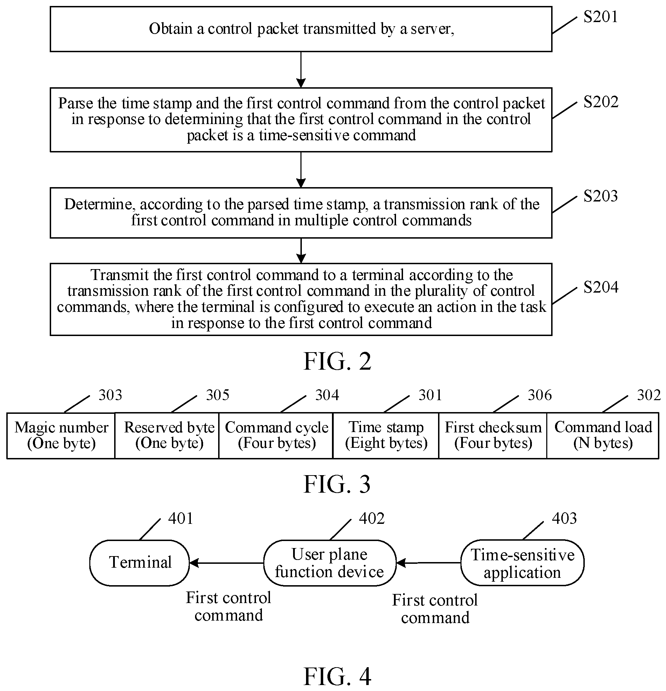

Hereinafter a method for processing data provided in embodiments of the present disclosure is described with reference to the accompanying drawings. Reference is made to FIG. 2, which is a flowchart of a method for processing data. The method includes the following operations.

S201: Obtain a control packet transmitted by a server.

In a scenario in which a terminal is controlled to work based on network communication technologies, the server may transmit a control command to the terminal through a network, to control the terminal to work. Here a control command that is to be transmitted may be called a first control command. The first control command may be transmitted in a packet, that is, the first control command is carried by the packet, and the packet carrying the first control command may be called the control packet.

Hence, the control packet includes the first control command. To facilitate accurate determining of a transmission rank of the first control command subsequently, the control packet may further include a time stamp at which the server transmits the first control command.

Different packets may be generated under different transmission protocols between the server and the terminal. The transmission protocol may be the transmission control protocol (TCP), the user datagram protocol (UDP), or the like. If the transmission protocol is the TCP, the control packet may be a TCP packet. If the transmission protocol is the UDP, the control packet may be a UDP packet.

In all embodiments of the present disclosure, a structure of the control packet may be defined through the transmission protocol, so that a user plane function device can strictly control transmission sequences of different control commands based on the transmission protocol. Usually, the control packet may include a packet header and a packet body. The packet header includes some necessary control information and description information of the packet body, for example, information related to a transmitter, a receiver, and the time stamp. This is not limited herein. The packet body is main content of a packet and includes data that needs to be transmitted. Here the data may be a command load, e.g., the first control command. The command load is configured for specifying the actual content of the first control command delivered by the server, for example, the actual content may be moving forward, moving backward, staying motionless, or rotating. The instruction load may be customized by a control application according to a service requirement. Reference is made to FIG. 3, which is a schematic diagram of a control packet according to an embodiment of the present disclosure. The time stamp may be as indicated by 301 in FIG. 3. Here the time stamp may occupy eight bytes. The first control command may be as indicated by 302 in FIG. 3. Herein the quantity of bytes of the first control command is not limited and may be determined according to an actual requirement. N in FIG. 3 may be any value determined according to an actual requirement.

Content included in the control packet is not limited herein. Specific content in the control packet, including a definition of a structure and a definition of a default value, may be customized according to a requirement.

In all embodiments of the present disclosure, the packet header of the control packet may further include a type identifier, and the type identifier indicates whether the first control command is a time-sensitive command. In all embodiments of the present disclosure, the type identifier may occupy one byte. The type identifier may be embodied in various forms, for example, it may be a number or a symbol. As an example, the type identifier is embodied as a numerical value. In this case, the type identifier may be called a magic number, referring to 303 in FIG. 3.

In all embodiments of the present disclosure, the packet header of the control packet may further include a command cycle. The command cycle represents a cycle with which the control application transmits a control command, that is, it is a time interval between transmissions of two consecutive control commands. A field indicating the command cycle may occupy four bytes, as shown in 304 in FIG. 3. A unit of the command cycle is not limited herein, and may be, for example, second, millisecond, or microsecond. In all embodiments of the present disclosure, the unit of the command cycle may be 100 microseconds.

In all embodiments of the present disclosure, the packet header of the control packet may further include a reserved byte. The reserved byte is one byte for extension and has a default value of 0. The reserved byte may be as indicated by 305 in FIG. 3.

In all embodiments of the present disclosure, the packet header of the control packet may further include a checksum. For distinction, the checksum carried in the packet header of the control packet may be called a first checksum. The first checksum occupies four bytes, referring to 306 in FIG. 3.

In all embodiments of the present disclosure, the network supporting the server in delivering the control command to the terminal may be a 5G network, a 4G network, a 3G network, or the like. As an example, the network is the 5G network. The 5G network may include a 5G public network and a 5G non-public network. Herein embodiments of the present disclosure are mainly described by using the 5G non-public network as an example. The 5G non-public network includes a 5G base station and a 5G core network. The 5G base station is a core device of the 5G network, provides wireless coverage, and implements wireless signal transmission between a wired communication network and a wireless terminal. An architecture and a form of the base station directly affect deployment of the 5G network. Because a higher frequency indicates greater attenuation in signal transmission, base stations of the 5G network are generally deployed with a higher density. The 5G core network is further divided into a control plane function device and a user plane function device.

Because there are many uncontrollable factors in transmission of the control commands via the network, the control commands of a designated time sequence may be shuffled. Once these control commands are disordered, the terminal cannot work correctly. Therefore, to avoid this case, here the user plane function device is improved. Based on the existing user plane function device, an add-on function for the time-sensitive command is developed, so that strict control on the time sequence is implemented for the time-sensitive commands by operations S201 to S204. The user plane function device is a device close to the side of the terminal. When the server and the terminal are far away, the control command transmitted by the server to the terminal via the network travels a long transmission distance, and even if the control commands are disordered, a correct transmission rank of the control command can be obtained through the processing at the user plane function device. Because the user plane function device is a device close to the terminal, the control commands received by the terminal have the same time sequence as they are transmitted from the user plane function device.

To control the terminal, a control application may be installed on the server. The control command delivered by the server may be specifically a control command delivered by the control application, and a control application delivering the time-sensitive command may be referred to as a time sensitive application. Based on the foregoing descriptions, an architectural diagram of a software system of a method for processing data is provided according to an embodiment of the present disclosure, as shown in FIG. 4. The software system includes a terminal 401, a user plane function device 402 in a network, and a time sensitive application 403 installed on a server. When network communication technology is applied to an industrial Internet scenario and the network communication technology is 5G technology, the terminal 401 may be a 5G industrial terminal. The time-sensitive application 403 may transmit a first control command to the terminal 401 through the network. After receiving a control packet including the first control command, the user plane function device 402 may process the first control command to obtain a correct transmission rank of the first control command, and then transmit the first control command to the terminal 401 according to the transmission rank.

S202: Parse the time stamp and the first control command from the control packet in response to determining that the first control command in the control packet is a time-sensitive command.

Although the server transmits the control command to instruct operation of the terminal, the transmitted control command may not be the time-sensitive command. Here operations S202 to S204 are performed only for the time-sensitive command. The time-sensitive command refers to a command meeting following conditions: the command coordinates with another (a second) control command for controlling a terminal to complete a task, and a first action of the terminal in response to the command and a second action of the terminal in response to the second control command follow a preset order when the terminal executes the task. In other words, the terminal needs to respond to the time-sensitive commands strictly in a sequence required by the task and execute the actions as instructed by the time-sensitive commands. Otherwise, the task may be failed. In addition, when the response(s) to other control command(s) for controlling the terminal to complete the same task also follow the sequence, the other control command(s) is also treated as the time-sensitive command(s).

Therefore, after receiving the first control command, the user plane function device may determine whether the first control command is the time-sensitive command. When it is determined that the first control command is the time-sensitive command, a correct transmission rank of the first control command needs to be determined. Hence, the user plane function device parses the time stamp from the control packet besides parsing the first control command from the control packet, so that the transmission rank of the first control command can be determined according to the time stamp. When it is determined that the first control command in the control packet is not the time-sensitive command, the user plane function device may skip, by default, the operations S202 to S204 on the first control command, because a position of the non-time-sensitive command in a sequence of transmitting the control commands does not affect normal operation of the terminal. In this case, the user plane function device may directly transmit the first control command to the terminal. The operation of parsing the first control command may be performed in S202 or may be alternatively performed in S203, which is not limited herein. A manner of parsing the first control command may be as follows. The first control command is parsed from remaining bytes in the control packet, where the remaining bytes refer to bytes not occupied by the packet header.

There may be various manners of determining whether the first control command is the time-sensitive command. A specific manner depends on a basis for the determination.

In all embodiments of the present disclosure, the control packet may further include the type identifier, and the type identifier may be a field which describes the packet body and is located in the packet header. In an exemplary structure of the control packet, the type identifier may refer to 303 in FIG. 3. The type identifier indicates whether the first control command is the time-sensitive command. Therefore, the type identifier may be used as a determining basis. Whether the first control command is the time-sensitive command is determined using the type identifier. In this case, a manner of determining whether the first control command in the control packet is the time-sensitive command may be as follows. The type identifier is obtained from the control packet, and it is determined, according to the type identifier, whether the first control command is the time-sensitive command.

For example, the type identifier is a magic number, and a value of the magic number representing that the first control command is the time-sensitive command is different from a value of the magic number representing that the first control command is not the time-sensitive command. Configuration of the values is not limited herein. For example, when the first control command is the time-sensitive command, the value of the magic number may be 12, and when the first control command is not the time-sensitive command, the value of the magic number may be a value other than 12.

The type identifier may directly indicate whether the first control command is the time-sensitive command. Therefore, whether the first control command is the time-sensitive command can be determined more simply and directly by using the type identifier as the determining basis.

Generally, the control packet is obtained through encapsulating the first control command added with the packet header. When obtaining the first control command, the control packet needs to be decapsulated. Decapsulation is performed layer by layer. For example, the packet header may be removed first to obtain an actual load of the control packet. The actual load is all content included in the control packet, for example, necessary control information in the packet body, description information of the packet body, and the first control command in the packet body. Then, specific content such as the type identifier can be read from the actual load.

Here the structure of the control packet for carrying the time-sensitive command is defined, and there is a requirement on data length of content included in the structure. The control packet for transmitting the time-sensitive command needs to at least satisfy this requirement. Hence, before obtaining the type identifier from the control packet, the user plane function device may first obtain a packet length of the control packet and perform initial determination on the first control command according to the packet length. Here the packet length may refer to a quantity of bytes of the actual load. When it is determined that the packet length is greater than a length threshold, it is determined the packet length of the control packet meets the requirement on data length for transmitting the time-sensitive command, and thus it is possible that the first control command in the control packet is the time-sensitive command. Therefore, the operation of obtaining the type identifier from the control packet may be performed to further determine whether the first control command is actually the time-sensitive command. When it is determined that the packet length is less than or equal to the length threshold, it is determined that the packet length of the control packet does not meet the requirement on data length for transmitting the time-sensitive command, and the first control command in the control packet is not the time-sensitive command. Because the transmission rank (i.e., the aforementioned position in the sequence of control commands) of the non-time-sensitive command does not affect the normal operation of the terminal, the user plane function device may skip operations S202 to S204 on the first control command by default and directly transmit the first control command to the terminal.

The packet length and the length threshold may each be indicated by a quantity of bytes. The length threshold is set based on a data length of all information included in the packet header in the control packet. For example, the packet header includes the time stamp and the type identifier, the time stamp occupies eight bytes, and the type identifier occupies one byte. In this case, the length threshold may be nine bytes. When the packet header further includes other information occupying nine bytes, the length threshold may be 18 bytes. In addition to the packet header, the control packet further includes the packet body, and the first control command in the packet body also occupies a certain data length. Therefore, when the first control command in the control packet is the time-sensitive command, the packet length of the control packet needs to be greater than the length threshold.

Herein whether the first control command is the time-sensitive command is determined first based on the packet length. That is, it is first determined from the perspective of the whole packet. In this way, when it is determined from the perspective of the whole packet that the first control command is not the time-sensitive command, the type identifier does not need to be further obtained, that is, whether the first control command is the time-sensitive command does not need to be determined accordingly to the type identifier. Hence, it avoids unnecessary operations, reduces resource consumption, and improves determining efficiency. When it is determined from the perspective of the whole packet that the first control command may be the time-sensitive command, whether the first control command is the time-sensitive command may be further determined with reference to the type identifier, that is, whether the first control command is the time-sensitive command is determined with reference to both the packet length and the type identifier, so that determining accuracy can be improved.

When the first control command is the time-sensitive command is determined based on the type identifier, a manner of determining whether the first control command is the time-sensitive command may also vary under different defined structures of the control packet. When the control packet does not include other information indicating whether the first control command is the time-sensitive command, the determination may be performed using only the type identifier. In this case, the manner of determining whether the first control command is the time-sensitive command may be as follows. When the type identifier is a time-sensitive identifier (i.e., an identified indicating the time-sensitive command), the first control command is determined to be the time-sensitive command. A form of the time-sensitive identifier may depend on a form of the type identifier. When the type identifier is a magic number, the time-sensitive identifier may be the magic number having a specific value, for example, 12. In this way, whether the first control command carried in the control packet is the time-sensitive command is determined directly according to the type identifier in the control packet. The type of the control command can thus be efficiently determined, and consumption of processing resources is reduced.

In all embodiments of the present disclosure, on a basis the foregoing structure of the control packet, the control packet may further include a first checksum. The first checksum is for determining whether the first control command included in the current control packet is the time-sensitive command. A manner of calculating the first checksum is adding all bytes, as unsigned 16-bit integers, before the first checksum in the control packet to obtain an unsigned 32-bit integer as the first checksum. For example, when the control packet includes the magic number, the reserved byte, field indicating the command cycle, the time stamp, and the first checksum, all bytes located before the first checksum may be 14 bytes in total, and seven unsigned 16-bit integers are added to obtain an unsigned 32-bit integer through calculation. The first checksum carried in the control packet is pre-calculated and added to the control packet when the first control command carried in the control packet is the time-sensitive command.

In this case, whether the first control command is the time-sensitive command may be determined collaboratively with reference to the type identifier and the first checksum. Specifically, the manner of determining whether the first control command is the time-sensitive command may be as follows. When the type identifier is the time-sensitive identifier, the first checksum is obtained from the control packet, and the bytes located prior to the first checksum is fetched from the control packet. Then, these bytes are used to calculate a second checksum using, e.g., the aforementioned manner. The first checksum and the second checksum are compared to obtain a comparison result, and then whether the first control command is the time-sensitive command is determined based on the comparison result. In a case that the comparison result indicates that the first checksum is the same as the second checksum, it is determined that the first control command is the time-sensitive command. In a case that the comparison result indicates that the first checksum is different from the second checksum, it is determined that the first control command is not the time-sensitive command.

A manner of calculating the checksum has been illustrate as above. As an example, the control packet includes the magic number, the reserved byte, the command cycle, the time stamp, and the first checksum. First 18 bytes (where the first 18 bytes are all bytes corresponding to the magic number, the reserved byte, the command cycle, the time stamp, and the first checksum) of the command load in the control packet are obtained, and first 14 bytes (where the first 14 bytes are all bytes corresponding to the magic number, the reserved byte, the command cycle, and the time stamp, that is, bytes prior to the first checksum) are treated as seven unsigned 16-bit integers and are added to obtain the second checksum which is a unsigned32-bit integer. After the second checksum is obtained through the checksum calculation, the second checksum is compared with the 32-bit unsigned integer (that is, the first checksum) which is the last four bytes in the obtained 18 bytes. When the two values are not equal, that is, the first checksum is different from the second checksum, it indicates that the first control command is not the time-sensitive command, and the user plane function device may directly forward the first control command to the terminal by default. When the two values are equal, that is, the first checksum is the same as the second checksum, it indicates that the first control command is the time-sensitive command.

In the foregoing manner, whether the first control command is the time-sensitive command is determined with reference to the type identifier and the first checksum to avoid influence of a coincidence that the type identifier is exactly the same as the time-sensitive identifier. Accuracy of determining whether the first control command is the time-sensitive command is further improved.

S203: Determine, according to the parsed time stamp, a transmission rank of the first control command in multiple control commands.

After the time stamp is obtained, the transmission rank of the first control command may be determined. As discussed above, the time-sensitive commands for instructing the terminal to complete the task shall follow a specific temporal sequence when being transmitted to the terminal. Hence, the user plane function device needs to determine an accurate position (i.e., the transmission rank) of each time-sensitive command in such temporal sequence. When the transmission rank of each time-sensitive command is accurate, the sequence of transmitting the time-sensitive commands is accurate, and normal operation of the terminal can be ensured. For example, the transmission rank is a rank of the first control command in a queue obtained though sequencing the ranks of the multiple control command in an ascending order.

Here the main objective of determining the transmission rank of the first control command is to control the sequence of transmitting the time-sensitive commands to the terminal, that is, the time-sensitive commands are transmitted in the designated sequence. The designated sequence may refer to a sequence of transmitting the time-sensitive commands such that the terminal operates normally (that is, executes the task normally) under the control received time-sensitive commands. Because a message queue is organized with a sequence, storage positions of the messages in the message queue may represent the ranks of the messages in a sequence. Hence, a manner of determining the transmission rank of the first control command according to the time stamp may be as follows. The first control command is buffered into a message queue. The message queue is configured for buffering the control commands configured for instructing the terminal to execute the task, an order of the control commands in the message queue represents an order of transmitting the control commands, and a first position of the first control command in the message queue is determined according to the time stamp and serves as the transmission rank of the first control command. Here the message queue may be configured for buffering the time-sensitive commands, and each time-sensitive command serves as a message in the message queue. In this case, the first position refers to a position at which the time-sensitive command is stored in the message queue.

There may be various types of the message queues. For example, the message queue may be a linear queue or a circular queue. As an example, the message queue is the circular queue. The circular queue is a special message queue formed by adding some restrictions to the linear queue, so that the message queue may be circularly used while occupying a storage space of a fixed size. An advantage of the circular queue is as follows. When the circular queue is full, a new element can still be stored by replacing a head element of the circular queue. In this way, the circular queue has a capability of circulation and can save the storage space.

In some cases, the server may deliver control commands to the terminal successively under a specific frequency (or cycle). In this case, the control packet further includes a field indicating the command cycle, and a manner of determining the first position of the first control command in the message queue based on the time stamp may be as follows. The command cycle is obtained from the control packet, and the first position of the first control command in the message queue is determined according to the time stamp and the command cycle. As an example, the ordinal number of the rank/position of the first control command in the message queue is equal to the time stamp divided by the command cycle.

As an example, a time stamp at which the server transmits the 1^{st} control command is denoted as 0, and the command cycle is denoted as 100 microseconds. In this case, a time stamp at which the server transmits the 2^{nd} control command is denoted as 100 microseconds, a time stamp at which the server transmits the 3^{rd} control command is denoted as 200 microseconds, and a time stamp at which the server transmits the 4^{th} control command is denoted as 300 microseconds, and the rest can be deduced by analogy. When the time stamp of a certain control command is 200 milliseconds, and by referring to the command cycle, it can be learned this control command is the 3^{rd} control command, and the position of this control command in the message queue is the third place in the message queue. As another example, the 1^{st} command has already been buffered in the message queue. In this case, referring to the command cycle of 100 microseconds and the time stamp of 200 microseconds, it can be learned that the control command having this time stamp is spaced apart from the 1^{st} control command in the message queue by one rank.

In the foregoing manner, the transmission rank of the first control command is determined with reference to the command cycle and the time stamp, so that the accurate position of the first control command in the message queue can be directly and quickly determined. Thereby, it facilitates subsequently transmission of the first control command to the terminal. Here the correct transmission rank relies on the position of the first control command in the message queue.

S204: Transmitting the first control command to a terminal according to the transmission rank of the first control command in the plurality of control commands, where the terminal is configured to execute an action in the task in response to the first control command.

After determining the transmission rank of the first control command, the user plane function device may transmit the first control command to the terminal according to the transmission rank, so that the terminal may execute action, as instructed by the first control command, in the task in response to receiving the first control command.

As illustrated above, step S203 may be determining the first position of the first control command in the message queue according to the time stamp and buffering the first control command at the first position in the message queue. In such case, S204 may comprise reading the first control command from the first position in the message queue and transmitting the first control command to the terminal.

After obtaining the transmission rank, the user plane function device can determine the transmission rank to serve as a rank (i.e., a sequential number) of the first control command in the sequence of transmitting the control commands for instructing the terminal to execute the task. Here a specific time of transmitting the first control command is not limited. In all embodiments of the present disclosure, the first control command may be transmitted after its transmission rank has been determined. For example, once a control command determined immediately previous to the first control command in the sequence (or the message queue) has been transmitted, the first control command is transmitted.

In another embodiment, the server transmits the control command periodically to the terminal under the command cycle. In this case, the first control command may be transmitted when a command cycle terminates. To automatically transmit the first control command using the command cycle, a timer for triggering transmission of commands may be started, where the timer is restarted at an interval equal to the command cycle. That is, the timer is restarted each time one command cycle lapses. In all embodiments of the present disclosure, a manner of reading the first control command from the first position in the message queue and transmitting the first control command to the terminal may be as follows. When the timer is restarted at a moment preset for transmitting the first control command, the first control command is read from the first position in the message queue and then transmitted to the terminal.

Here the timer is used and is restarted at an interval equal to the command cycle, so that the first control command can be automatically transmitted on a basis of the command cycle, thereby implementing automatic processing.

When the server transmits the first control command to the terminal via the network, in order to control the control commands (mainly the time-sensitive commands) to be transmitted according to the designated sequence, strict control of the time sequence is implemented on the time-sensitive command through operations S201 to S204. In this process, the time stamp at which the server transmits the first control command is determined by using a clock on the server, and the time at which the user plane function device transmits the first control command is determined with reference to a clock on the user plane function device. To ensure that the user plane function device can determine the transmission rank according to the time stamp and transmit the first control command accurately according to the transmission rank, time consistency between the server and the user plane function device needs to be ensured. Therefore, synchronizing devices may be deployed on the server and the user plane function device, respectively, and the synchronizing devices are configured for synchronizing clocks between the server and the user plane function device.

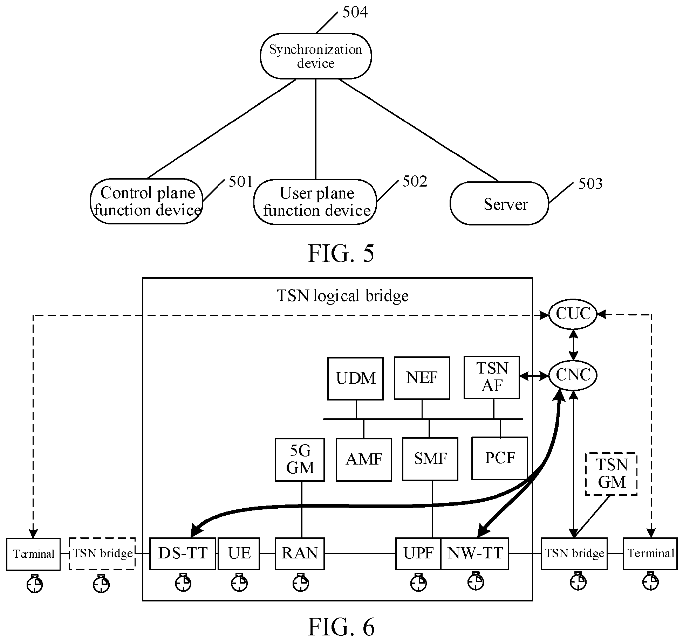

The synchronizing device may be a precise time protocol (PTP)-based synchronizing device, and specifically, may be a PTP synchronizing device based on the IEEE 1588 specification, so that strict time consistency between the server and the user plane function device in the entire scenario can be achieved, and nanosecond-level synchronization precision is achieved. As shown in FIG. 5, a 5G non-public network is used as an example in FIG. 5. The 5G non-public network includes a 5G base station and a 5G core network, and the 5G core network is further divided into a control plane function device (for example, as shown in 501 in FIG. 5) and a user plane function device (for example, as shown in 502 in FIG. 5). In addition, FIG. 5 further includes a server (for example, as shown in 503 in FIG. 5) that transmits a first control command. In this case, a synchronizing device 504 may be deployed on each of the control plane function device 501, the user plane function device 502, and the server 503.

In the foregoing manner, time consistency between the server and the user plane function device is controlled through the synchronizing devices, thereby ensuring accuracy of controlling the time sequence of the time-sensitive commands.

Hereinafter the method for processing data provided herein is compared with a method for processing data provided in the related art. In the related art, a time sensitive network (TSN) technology is used to perform time sequence control on the time-sensitive command. As a technology leading innovation in the network communication field, the TSN technology includes a plurality of key protocol standards, including IEEE802.1AS, IEEE802.1Qbv, and the like. These protocol standards are not only cornerstones of the TSN technology, but also key elements for implementing highly reliable and deterministic transmission. The IEEE802.1AS protocol is an important component of the TSN technology, and defines a precise clock synchronization mechanism, so that devices in the network can synchronize under microsecond-level time precision. This is very important to some application scenarios with an extremely high time requirement, such as cooperative operations in industrial automation, precise control in a vehicle network, and audio and video transmission.

As an example, the network is the 5G network. To support integration of the 5G network and the TSN, a time sensitive communication (TSC) function may be added. As shown in FIG. 6, a 5G network is a TSN virtual bridge, a device-side TSN translator (DS-TT) module is added to a UE side, and a network-side TSN translator (NW-TT) is added to a user plane function (UPF) side. The two TSN translators connect the 5G network to the TSN network. The 5G TSN network has a full central model network architecture defined by the IEEE 802.1Qcc protocol. Therefore, interaction between a TSN application function (AF) network element and a centralized network controller (CNC) is added to a policy control function (PCF) in the 5G network, so that the CNC configures and manages a 5G TSN logical bridge. The network architecture shown in FIG. 6 may further include an access and mobility management function (AMF), a centralized user controller (CUC), a grand master (GM), a network exposure function (NEF), a radio access network (RAN), a session management function (SMF), a unified data management (UDM), and the like.

Although the method for processing data provided in the related art can implement time sequence control, the TSN technology is not mature, a combination of the 5G network and the TSN technology is excessively complex, and version development of a plurality of 5G network elements is involved. Network compatibility needs to be considered. In addition, the 5G network, the 5G terminal, and the entire network architecture need to be upgraded. As a result, high costs are caused by current network use. However, in the method provided herein, a mature commercial PTP-based synchronizing device may be introduced to ensure clock synchronization between the user plane function device and the server in the network. In addition, the industrial Internet terminal does not need to be upgraded, and only software of a single network element, that is, the user plane function device, of the network needs to be upgraded, so that the time-sensitive command delivered by the server is transmitted to the terminal according to strict time consistency. The entire solution is simple and convenient to implement, has clear cost advantages, and can be widely applied to application scenarios related to a time sensitive application in the industrial Internet.

Herein when the server transmits the control command to the terminal via a network, a user plane function device in the network can obtain the control packet transmitted by the server, where the control packet comprises the first control command and the time stamp at which the server transmits the first control command. When the first control command in the control packet is the time-sensitive command, the first control command needs to be transmitted according to a specific transmission order, such that the terminal is ensured to complete the task correctly under control of the first control command. The time stamp represents a time at which the server transmits the first control command. Accordingly, the first control commands can be protected against disorder, which is due to uncontrollable factors when the first control command is transmitted to the terminal via the network. Specifically, the time stamp and the first control command may be read from the control packet, and a temporal rank (i.e., the transmission rank) of the first control command in a sequence of multiple transmitted first control commands can be determined according to the time stamp. Then, when transmitting these commands to the terminal, the first control command is transmitted according to its rank. The terminal is configured to perform the operation, as instructed by the first command, in the task in response to the first control command. Thus, for each time-sensitive command, an accurate transmission rank of the time-sensitive command can be determined before the time-sensitive command is transmitted to the terminal, and the time-sensitive command is transmitted according to its rank. When there are multiple control commands, a transmission sequence of the control commands can be kept consistent with its designated sequence to ensure successful task implementation, i.e., the transmitting is ensured to be correct. Hence, even if the temporal sequence of the control commands is shuffled in the transmission process, the user plane function device can still recover the correct transmission order, which ensures the control commands instructing the terminal to execute the task can be transmitted to the terminal strictly in the correct sequence. The terminal can thus operate correctly.

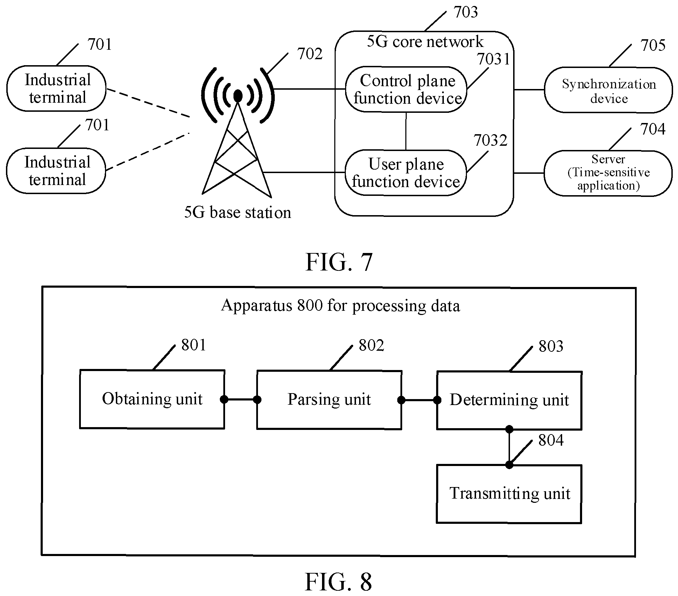

Hereinafter the method for processing data provided in the embodiments of the present disclosure is described with reference to the actual application scenario. An example of a product related to a 5G network and an industrial Internet application is used in the actual application scenario. A main application scenario is a time-sensitive application in an industrial Internet scenario based on a 5G non-public network, and an entire system architecture is as shown in FIG. 7. The entire system architecture includes industrial terminals 701, a 5G base station 702, a 5G core network 703, a server 704, and a synchronizing device 705. The 5G core network 703 includes a control plane function device 7031 and a user plane function device 7032, and a time sensitive application is installed on the server 704.

The industrial terminals 701 are 5G terminal devices, for example, industrial robots, that perform different actions by receiving different time-sensitive commands delivered by the remote server 704. The server may indicate that the industrial robot needs to move forward, move backward, stop, or the like.

The synchronizing device is a PTP-based synchronizing device. It is a mature commercial device and is mainly configured to implement precise time synchronization between the server and the device (for example, the control plane function device 7031 and the user plane function device 7032) included in the 5G core network.

The time sensitive application is an industrial Internet application deployed on the server 704, and is responsible for generating a control command of the industrial terminal according to a service logic requirement, and then delivering the control command to the industrial terminal through the user plane function device 7032 of the 5G network.

The structure of the control packet as shown in FIG. 3 is taken an example, and the user plane function device may perform the following operations to control a time sequence of the time-sensitive command.

Operation 1: A time sensitive application usually transmits a control command periodically to an industrial terminal. Here the time sensitive application transmits a control packet carrying a first control command to a user plane function device.

Operation 2: After receiving the control packet, the user plane function device first removes a packet header of a four-layer (TCP or UDP) packet to obtain an actual load. If a quantity of bytes (that is, a packet length) of the actual load is less than 18 bytes, it indicates that the first control command in the control packet is not a time-sensitive command, and the user plane function device directly forwards and processes the first control command in a default manner. If a quantity of bytes of the actual load is greater than 18 bytes, operation 3 is performed.

Operation 3: Continue to determine whether the first byte is equal to a magic number 12. If the first byte is not equal to the magic number 12, it indicates that the first control command in the control packet is not the time-sensitive command, and the user plane function device directly forwards and processes the first control command in a default manner. If the first byte is equal to the magic number 12, operation 4 is performed.

Operation 4: Read the first 18 bytes of the actual load, add seven unsigned 16-bit integers sequentially formed by the first 14 bytes, and compare the obtained second checksum, which is a 32-bit unsigned integer, with another 32-bit unsigned integer (that is, the first checksum) indicated by the last four bytes in the first 18 bytes. If values of the first checksum and the second checksum are not equal, it indicates that the first control command in the control packet is not the time-sensitive command, and the user plane function device directly forwards and processes the first control command in a default manner. If values of the first checksum and the second checksum are equal, operation 5 is performed.

Operation 5: Determine that the first control command is the time-sensitive command, first read a time stamp and a command cycle from first 14 bytes, and start a command-transmission timer, an interval of restarting the command-transmission timer is set to be the command cycle. Then, the user plane function device reads remaining bytes, that is, an actual instruction load, from the control packet, and buffers the first control command at a first position in a circular queue, where the first position determined by the time stamp and the command cycle. When the command-transmission timer is restated at a moment preset for transmitting the command at the first position, the buffered first control command is read from the circular queue and then transmitted to the industrial terminal.

On a basis of the foregoing aspects, embodiments of the present disclosure may be further combined to provide more implementations.

On a basis of the method for processing data provided in an embodiment as shown in FIG. 2, an embodiment of the present disclosure further provides an apparatus 800 for processing data. As shown in FIG. 8, the apparatus for processing data 800 includes an obtaining unit 801, a parsing unit 802, a determining unit 803, and a transmitting unit 804.

The obtaining unit 801 is configured for obtaining a control packet transmitted by a server, where the control packet comprises a first control command and a time stamp, and the time stamp indicates time at which the server transmits the first control command.

The parsing unit 802 is configured for parsing the time stamp and the first control command from the control packet in response to determining that the first control command in the control packet is a time-sensitive command, where the time-sensitive command refers to a command meeting following conditions: the command coordinates with a second control command for controlling a terminal to complete a task, and a first action of the terminal in response to the command and a second action of the terminal in response to the second control command follow a preset order when the terminal executes the task.

The determining unit 803 is configured for determining, according to the parsed time stamp, a transmission rank of the first control command in a plurality of control commands.

The transmitting unit 804 is configured for transmitting the first control command to a terminal according to the transmission rank of the first control command in the plurality of control commands, where the terminal is configured to execute an action in the task in response to the first control command.

In all embodiments of the present disclosure, the control packet may further comprise a type identifier indicating whether the first control command is the time-sensitive command, and the parsing unit 802 is configured for: obtaining the type identifier from the control packet; and determining, according to the type identifier, whether the first control command is the time-sensitive command.

In all embodiments of the present disclosure, the obtaining unit 801 may be further configured for obtaining a packet length of the control packet. The parsing unit 802 is further configured for obtaining the type identifier from the control packet in response to the packet length being greater than a length threshold.

In all embodiments of the present disclosure, the parsing unit 802 may be configured for determining that the first control command is the time-sensitive command, in response to the type identifier indicating the time-sensitive command.

In all embodiments of the present disclosure, the control packet may further comprise a first checksum, and the parsing unit 802 is configured for: obtaining, from the control packet, the first checksum and a plurality of bytes, in response to the type identifier indicating the time-sensitive command, where the plurality of bytes is located ahead of the first checksum in the control packet; calculating a second checksum of the plurality of bytes; comparing the first checksum and the second checksum to obtain a comparison result; and determining that the first control command is the time-sensitive command, in response to the comparison result indicating that the first checksum is equal to the second checksum.

In all embodiments of the present disclosure, the determining unit 803 may be configured for buffering the first control command into a message queue, where the message queue is configured for buffering the plurality of control commands configured for instructing the terminal to execute the task, an order of the control commands in the message queue represents an order of transmitting the control commands, and a first position of the first control command in the message queue is determined according to the time stamp and serves as the transmission rank of the first control command. The transmitting unit 804 is configured for reading the first control command from the first position in the message queue and transmitting the read first control command to the terminal.

In all embodiments of the present disclosure, the control packet may further comprise a field indicating a command cycle, and the determining unit 803 is configured for: obtaining the command cycle from the control packet; and determining the first position of the first control command in the message queue according to the time stamp and the command cycle.

In all embodiments of the present disclosure, the apparatus further may comprise a starting unit. The starting unit is configured for: starting a timer for triggering transmission of commands, where the timer is restarted at an interval equal to the command cycle. The transmitting unit 804 is configured for: reading the first control command from the first position in the message queue and transmitting the read first control command to the terminal, when the timer is restarted at a moment preset for transmitting the first control command.

In all embodiments of the present disclosure, the apparatus may be deployed on a user plane function device in a network, the server is configured for transmitting the first control command to the terminal via a network, a respective synchronizing device is deployed on each of the server and the user plane function device, and the synchronizing devices are configured for synchronizing clocks between the server and the user plane function device.

In all embodiments of the present disclosure, the transmitting unit 804 may be further configured for transmitting the first control command to the terminal, in response to the first control command in the control packet being not the time-sensitive command.

Herein when the server transmits the control command to the terminal via a network, a user plane function device in the network can obtain the control packet transmitted by the server, where the control packet comprises the first control command and the time stamp at which the server transmits the first control command. When the first control command in the control packet is the time-sensitive command, the first control command needs to be transmitted according to a specific transmission order, such that the terminal is ensured to complete the task correctly under control of the first control command. The time stamp represents a time at which the server transmits the first control command. Accordingly, the first control commands can be protected against disorder, which is due to uncontrollable factors when the first control command is transmitted to the terminal via the network. Specifically, the time stamp and the first control command may be read from the control packet, and a temporal rank (i.e., the transmission rank) of the first control command in a sequence of multiple transmitted first control commands can be determined according to the time stamp. Then, when transmitting these commands to the terminal, the first control command is transmitted according to its rank. The terminal is configured to perform the operation, as instructed by the first command, in the task in response to the first control command. Thus, for each time-sensitive command, an accurate transmission rank of the time-sensitive command can be determined before the time-sensitive command is transmitted to the terminal, and the time-sensitive command is transmitted according to its rank. When there are multiple control commands, a transmission sequence of the control commands can be kept consistent with its designated sequence to ensure successful task implementation, i.e., the transmitting is ensured to be correct. Hence, even if the temporal sequence of the control commands is shuffled in the transmission process, the user plane function device can still recover the correct transmission order, which ensures the control commands instructing the terminal to execute the task can be transmitted to the terminal strictly in the correct sequence. The terminal can thus operate correctly.

An embodiment of the present disclosure further provides a computer device. The computer device may be a terminal. As an example, the terminal is a smartphone.

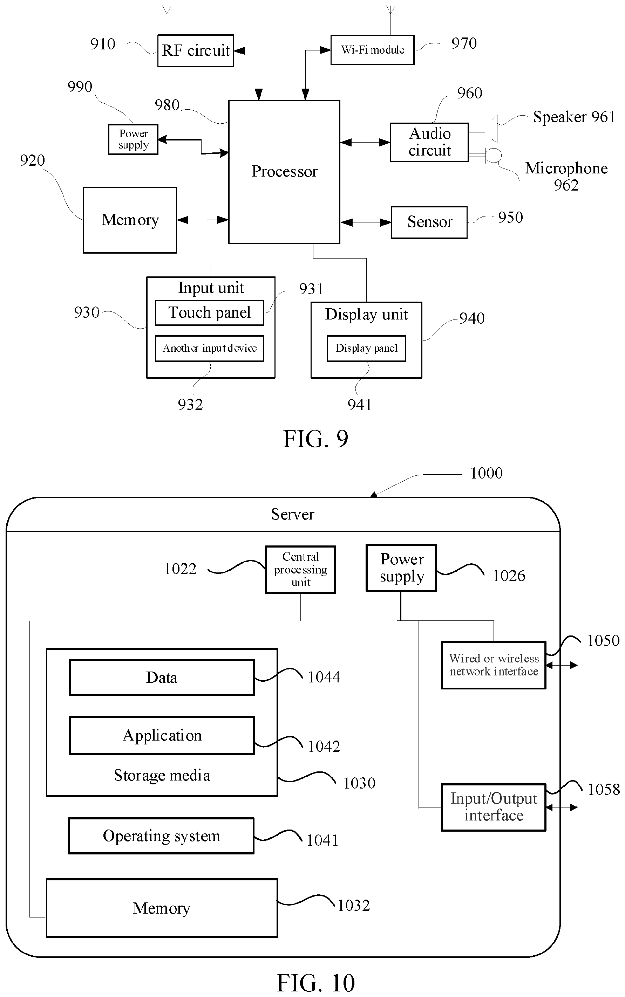

FIG. 9 is a block diagram of a partial structure of a smartphone according to an embodiment of the present disclosure. Referring to FIG. 9, the smartphone includes components such as a radio frequency (RF) circuit 910, a memory 920, an input unit 930, a display unit 940, a sensor 950, an audio circuit 960, a wireless fidelity (Wi-Fi) module 970, a processor 980, and a power supply 990. The input unit 930 may include a touch panel 931 and another input device 932, the display unit 940 may include a display panel 941, and the audio circuit 960 may include a speaker 961 and a microphone 962. The structure of the smartphone shown in FIG. 9 does not constitute a limitation to the smart phone, and the smart phone may include more components or fewer components than those shown in the figure, or some components may be combined, or a different component deployment may be used.

The memory 920 may be configured to store a software program and a module. The processor 980 executes various functional applications and data processing of the smartphone by running the software program and the module stored in the memory 920. The memory 920 may mainly include a program storage area and a data storage area. The program storage area may store an operating system, an application required by at least one function (such as a sound playback function and an image playback function), or the like. The data storage area may store data (such as audio data and a phone book) created based on use of the smartphone, or the like. In addition, the memory 920 may include a high-speed random-access memory, and may further include a nonvolatile memory, such as at least one magnetic disk storage device, a flash storage device, or another volatile solid-state storage device.

The processor 980 is a control center of the smartphone, is connected to various parts of the entire smartphone by using various interfaces and lines and executes various functions of the smartphone and processes data by running or executing a software program and/or a module stored in the memory 920 and invoking data stored in the memory 920. In some embodiments, the processor 980 may include one or more processing units. Preferably, the processor 980 may integrate an application processor and a modem processor. The application processor mainly processes an operating system, a user interface, an application, and the like. The modem processor mainly processes wireless communication. The modem processor may alternatively not be integrated in the processor 980.

In this embodiment, operations that need to be performed by the processor 980 in the smartphone may be implemented based on the structure shown in FIG. 9.

The computer device provided in this embodiment of the present disclosure may alternatively be a server, and the server may be used as a user plane function device. Referring to FIG. 10, FIG. 10 is a structural diagram of a server 1000 according to an embodiment of the present disclosure. The server 1000 may vary greatly because of different configurations or performance, and may include one or more processors, for example, a central processing unit (CPU) 1022, a memory 1032, and one or more storage media 1030 (for example, one or more mass storage devices) that store an application program 1042 or data 1044. The memory 1032 and the storage medium 1030 may be temporarily stored or permanently stored. The program stored in the storage medium 1030 may include one or more modules (not marked in the figure), and each module may include a series of instruction operations on the server. Further, the central processing unit 1022 may be configured to communicate with the storage medium 1030 and execute a series of instructions and operations in the storage medium 1030 on the server 1000.

The server 1000 may further include one or more power supplies 1026, one or more wired or wireless network interfaces 1050, one or more input/output interfaces 1058, and/or one or more operating systems 1041, such as Windows ServerTM, Mac OS XTM, UnixTM, LinuxTM, and FreeBSDTM.

In this embodiment, operations that need to be performed by the CPU 1022 in the server 1000 may be implemented based on the structure shown in FIG. 10.

According to one aspect of the present disclosure, a computer-readable storage medium is provided, the computer-readable storage medium being configured to store a computer program, and the computer program being configured to perform the method for processing data according to the foregoing embodiments.

According to an aspect of the present disclosure, a computer program product is provided. The computer program product includes a computer program, a computer-readable storage medium having the computer program stored therein. The processor of the computer device reads the computer program from the computer-readable storage medium, and the processor executes the computer program, so that the computer device performs the methods provided in the various optional implementations of the foregoing embodiments.

Descriptions of processes or structures corresponding to the foregoing accompanying drawings have respective focuses. For a part that is not described in detail in a process or structure, please refer to related descriptions of another process or structure.

The specification and terms "first", "second", "third", "fourth", and the like (if any) of the foregoing accompanying drawings of the present disclosure are used to distinguish similar objects but are unnecessarily used to describe a specific sequence or order. The data used in such a way is interchangeable in proper circumstances, so that the embodiments of the present disclosure described herein can be implemented, for example, in other sequences than the sequence illustrated or described herein. In addition, the terms "comprise", "include", and any other variants thereof mean to cover the non-exclusive inclusion. For example, a process, method, system, product, or device that includes a list of operations or units is not necessarily limited to those operations or units that are clearly listed but may include other operations or units not expressly listed or inherent to such a process, method, system, product, or device.

In the embodiments provided in the present disclosure, the disclosed system, apparatus, and method may be implemented in other manners. For example, the described apparatus embodiment is merely an example. For example, unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one place, or may be distributed on a plurality of network units. Some or all of the units may be selected based on actual requirements to implement the objectives of the solutions of this embodiment.

In addition, functional units in this embodiment of the present disclosure may be integrated into one processing unit, each of the units may exist alone physically, or two or more units are integrated into one unit. The integrated unit may be implemented in the form of hardware or may be implemented in the form of a software functional unit.

When the integrated unit is implemented in the form of a software functional unit and sold or used as an independent product, the integrated unit may be stored in a computer-readable storage medium. Based on such an understanding, the technical solutions of the present disclosure essentially, or the part contributing to the related art, or all or a part of the technical solutions may be implemented in the form of a software product. The computer software product is stored in a storage medium and includes several instructions for instructing a computer device (which may be a terminal, a server, a network device, or the like) to perform all or some of the operations of the methods described in the embodiments of the present disclosure. The foregoing storage medium includes any medium that can store a computer program, such as a USB flash drive, a removable hard disk, a read-only memory (ROM), a random-access memory (RAM), a magnetic disk, or an optical disc.

The foregoing descriptions and embodiments are merely intended to describe the technical solutions of the present disclosure, rather than limit the present disclosure. Although the present disclosure is described in detail with reference to foregoing embodiments, a person of ordinary skill in the art should understand that modifications can still be made to the technical solutions described in foregoing embodiments or equivalent replacements can be made to some technical features thereof.

## Claims

1. A method for processing data, executable by a computer device, the method comprising:
obtaining a control packet transmitted by a server, wherein the control packet comprises a first control command and a time stamp, and the time stamp indicates time at which the server transmits the first control command;
parsing the time stamp and the first control command from the control packet in response to determining that the first control command in the control packet is a time-sensitive command, wherein the time-sensitive command refers to a command meeting following conditions:
the command coordinates with a second control command for controlling a terminal to complete a task, and
a first action of the terminal in response to the command and a second action of the terminal in response to the second control command follow a preset order when the terminal
executes the task;
determining, according to the parsed time stamp, a transmission rank of the first control command in a plurality of control commands; and
transmitting the first control command to a terminal according to the transmission rank of the first control command in the plurality of control commands, wherein the terminal is configured to execute an action in the task in response to the first control command.

2. The method according to claim 1, wherein:
the control packet further comprises a type identifier indicating whether the first control command is the time-sensitive command, and
the method further comprises:
obtaining the type identifier from the control packet; and
determining, according to the type identifier, whether the first control command is the time-sensitive command.

3. The method according to claim 2, wherein:
before obtaining the type identifier from the control packet, the method further comprises obtaining a packet length of the control packet; and
obtaining the type identifier from the control packet comprises:
obtaining the type identifier from the control packet in response to the packet length being greater than a length threshold.

4. The method according to claim 2 or 3, wherein determining, according to the type identifier, whether the first control command is the time-sensitive command comprises:
determining that the first control command is the time-sensitive command, in response to the type identifier indicating the time-sensitive command.

5. The method according to claim 2 or 3, wherein the control packet further comprises a first checksum, and determining, according to the type identifier, whether the first control command is the time-sensitive command comprises:
obtaining, from the control packet, the first checksum and a plurality of bytes, in response to the type identifier indicating the time-sensitive command, wherein the plurality of bytes is located ahead of the first checksum in the control packet;
calculating a second checksum of the plurality of bytes;
comparing the first checksum and the second checksum to obtain a comparison result; and
determining that the first control command is the time-sensitive command, in response to the comparison result indicating that the first checksum is equal to the second checksum.

6. The method according to any one of claims 1 to 5, wherein:
determining, according to the parsed time stamp, the transmission rank of the first control command in the plurality of control commands comprises:
buffering the first control command into a message queue, wherein the message queue is configured for buffering the plurality of control commands configured for instructing the terminal to execute the task, an order of the control commands in the message queue represents an order of transmitting the control commands, and a first position of the first control command in the message queue is determined according to the time stamp and serves
as the transmission rank of the first control command; and
transmitting the first control command to the terminal according to the transmission rank of the first control command in the plurality of control commands, comprises:
reading the first control command from the first position in the message queue, and
transmitting the read first control command to the terminal.

7. The method according to claim 6, wherein the control packet further comprises a field indicating a command cycle, and buffering the first control command into the message queue comprises:
obtaining the command cycle from the control packet; and
determining the first position of the first control command in the message queue according to the time stamp and the command cycle.

8. The method according to claim 7, further comprising:
starting a timer for triggering transmission of commands, wherein the timer is restarted at an interval equal to the command cycle; and
reading the first control command from the first position in the message queue and transmitting the read first control command to the terminal comprises:
reading the first control command from the first position in the message queue and transmitting the read first control command to the terminal, when the timer is restarted at a moment preset for transmitting the first control command.

9. The method according to any one of claims 1 to 8, wherein:
the computer device is a user plane function device in a network;
the server is configured for transmitting the first control command to the terminal via a network;
a respective synchronizing device is deployed on each of the server and the user plane function device; and
the synchronizing devices are configured for synchronizing clocks between the server and the user plane function device.

10. The method according to any one of claims 1 to 9, further comprising:
transmitting the first control command to the terminal, in response to the first control command in the control packet being not the time-sensitive command.

11. An apparatus for processing data, comprising:
an obtaining unit, configured for obtaining a control packet transmitted by a server, wherein the control packet comprises a first control command and a time stamp, and the time stamp indicates time at which the server transmits the first control command;
a parsing unit, configured for parsing the time stamp and the first control command from the control packet in response to determining that the first control command in the control packet is a time-sensitive command, wherein the time-sensitive command refers to a command meeting following conditions:
the command coordinates with a second control command for controlling a terminal to complete a task, and
a first action of the terminal in response to the command and a second action of the terminal in response to the second control command follow a preset order when the terminal executes the task;
a determining unit, configured for determining, according to the parsed time stamp, a transmission rank of the first control command in a plurality of control commands; and
a transmitting unit, configured for transmitting the first control command to a terminal according to the transmission rank of the first control command in the plurality of control commands, wherein the terminal is configured to execute an action in the task in response to the first control command.

12. A computer device, comprising a processor and a memory, wherein:
the memory stores a computer program and is configured for transmitting the computer program to the processor; and
the processor, when executing instructions in the computer program, implements the method according to any one of claims 1 to 10.

13. A computer-readable storage medium, storing a computer program, wherein the computer program, when executed by a processor, causes the processor to perform the method according to any one of claims 1 to 10.

14. A computer program product, comprising a computer program, wherein the computer program, when executed by a processor, implements the method according to any one of claims 1 to 10.
